# EUROPÄISCHE PATENTSCHRIFT

(11) **EP 0 969 009 B1**
(45) Veröffentlichungstag und Bekanntmachung des Hinweises auf die Patenterteilung: **27.08.2003**
(21) Anmeldenummer: 99110829.1
(22) Anmeldetag: 05.06.1999
(51) Int. Cl.: C07F 9/48

(54) **Verfahren zur Herstellung von Phosphonigsäureestern**
Process for the preparation of phosphonous acids esters
Procédé de préparation d'esters d'acides phosphoneux

(30) Priorität: 29.06.1998 DE 19828861
(43) Veröffentlichungstag der Anmeldung: 05.01.2000
(73) Patentinhaber: Clariant GmbH, 65929 Frankfurt am Main (DE)
(72) Erfinder: Hörold, Sebastian, Dr., 50374 Erftstadt (DE); Weferling, Norbert, Dr., 50354 Hürth (DE); Breuer, Heinz-Peter, 50354 Hürth (DE)

(56) Entgegenhaltungen:
- WO-A-99/28326
- DE-C- 19 604 195
- US-A- 3 316 293
- US-A- 3 579 576
- CHEMICAL ABSTRACTS, vol. 113, no. 5, 30. Juli 1990 (1990-07-30) Columbus, Ohio, US; abstract no. 040845, KUDRYAVTSEVA L I: "Alkylation of phosphorus iodides. IV. Reactions of alkyl iodides with phosphorus and iodine mixtures" XP002900416 & ZH. OBSHCH. KHIM. (ZOKHA4,0044460X);1990; VOL.60 (1); PP.74-9, Inst. Org. Khim.;Kiev; USSR (SU)

## Beschreibung

Die vorliegende Erfindung betrifft ein Verfahren zur Herstellung von Phosphonigsäureestern.

Phosphonigsäuren und ihre Ester stellen wertvolle Synthesebausteine für die Herstellung von Polymeren und Kunststoffen dar. Die aus Phosphonigsäuren bzw. deren Estern zugänglichen Phosphinsäuren und Phosphinsäureester können als Comonomere bei der Herstellung von Polyestern eingesetzt werden. Auf diese Weise erhält man schwer entflammbare Polyester, die beispielsweise zu Fasern verarbeitet werden können.

Gemäß der DE-OS 21 00 779 werden Dialkylphosphinsäuredialkylester erhalten, indem man Ester der phosphonigen Säure an Olefine mit Hilfe von Radikalstartern anlagert.

Die DE 25 40 283 A1 beschreibt die Addition von Phosphinen an α-,β-ungesättigte Carbonsäuren in Gegenwart von wäßriger Salzsäure und anschließender Oxidation.

Phosphonigsäuremonoester können durch Versterung von phosphonigen Säuren erhalten werden. Zur Veresterung kann beispielsweise Ethylenoxid verwendet werden (Houben-Weyl, Band 12/1, S, 320).

Darüber hinaus sind Phosphonigsäuremonoester aus Phosphonigsäurediestern durch Verseifung oder aus Phosphonigsäuredihalogeniden durch Umsetzung mit Alkohlen zugänglich (Houben-Weyl, Band 12/1, S, 320). Üblicherweise werden die Phosphonigsäurediester aus Phosphonigsäuredihalogeniden hergestellt.

Die vorgenannten, als Edukte für andere Synthesen einsetzbaren Phosphonigsäuredihalogenide, z.B. Methyldichlorphosphin, werden selbst bisher in einer aufwendigen Synthese aus Phosphortrihalogeniden und Alkylhalogeniden in Gegenwart von Aluminiumchlorid hergestellt (Houben-Weyl, Band 12/1, S. 306). Die Reaktion ist stark exotherm und technisch nur schwierig zu beherrschen. Es werden zudem verschiedene Nebenprodukte gebildet, die, wie zum Teil auch die vorgenannten Ausgangsprodukte, giftig und/oder korrosiv, also höchst unerwünscht, sind.

Die vorgenannten Verfahren sind zudem aufwendig und im technischen Maßstab nicht ohne Schwierigkeiten durchzuführen.

Es besteht daher ein Bedarf an Verfahren zur Herstellung funktioneller Phosphonigsäureester, welches auf einfache Art und Weise durchführbar ist und bei dem einheitliche Produkte in hoher Ausbeute erhalten werden. Auch sollte ein solches Verfahren den bisher bekannten umwelttechnisch deutlich überlegen sein.

Der Erfindung liegt somit die Aufgabe zugrunde, ein Verfahren zur Herstellung von Phosphonigsäureestern zur Verfügung zu stellen, das die vorgenannten Nachteile vermeidet und von elementarem gelbem Phosphor als Edukt ausgeht. Außerdem soll die Synthese von einfach zugänglichen Produkten ausgehen und besonders wirtschaftlich sein.

Diese Aufgabe wird gelöst durch ein Verfahren der eingangs beschriebenen Art, dadurch gekennzeichnet, daß man
a) elementaren gelben Phosphor mit Alkylhalogeniden in Gegenwart von Alkali- und/oder Erdalkalihydroxiden zu einem Gemisch, welches als Hauptbestandteile die Alkaliund/oder Erdalkalisalze der Alkylphosphonigen, Phosphorigen und Hypophosphorigen Säure enthält, umsetzt
b) aus dem nach a) erhaltenen Gemisch die Alkylphosphonige Säure entfernt
c) die Alkylphosphonige Säure verestert.

Bevorzugt werden als Alkylhalogenide Methylchlorid oder Methylbromid eingesetzt.

Bevorzugt wird die Reaktion im Schritt a) in einem Zwei-Phasen-System aus wäßrigem Alkali- oder Erdalkalihydroxid oder Gemischen davon und einem organischen Lösungsmittel durchgeführt.

Bevorzugt werden als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet.

Besonders bevorzugt wird als organisches Lösungsmittel Toluol, allein oder in Kombination mit Alkoholen, verwendet.

Bevorzugt wird die Reaktion in Anwesenheit eines Phasen-Transfer-Katalysators durchgeführt.

Bevorzugt handelt es sich bei dem Phasen-Transfer-Katalysator um Tetraalkylphosphoniumhalogenide, Triphenylalkylphosphoniumhalogenide oder Tetraorganylammoniumhalogenide.

Bevorzugt beträgt die Temperatur bei der Reaktion -20 bis +60 °C.

Besonders bevorzugt beträgt die Temperatur 0 bis 30 °C.

Bevorzugt wird die Reaktion unter einem Druck von 0 bis 10 bar durchgeführt.

Bevorzugt wird das erfindungsgemäße Verfahren so ausgeführt, daß man den gelben Phosphor in einem Lösungsmittel oder einem Lösungsmittelgemisch suspendiert und dann mit Alkylhalogenid und einer Verbindung der Formel MOH oder M'(OH)₂ oder Gemischen davon, in denen M ein Alkalimetall und M' ein Erdalkalimetall bedeutet, umsetzt.

Bevorzugt werden der gelbe Phosphor und das Alkylhalogenid im molaren Verhältnis von 1:1 bis 1:3 miteinander umgesetzt, wobei das molare Verhältnis von gelbem Phosphor zur Verbindung der Formel MOH oder M'(OH)₂ 1:1 bis 1:5 beträgt.

Bevorzugt wird im Schritt b) die Alkylphosphonige Säure destillativ entfernt.

Bevorzugt wird im Schritt c) mittels Oxethylierung verestert.

Bevorzugt wird zur Oxethylierung nach Schritt c) ein Oxiran wie Ethylenoxid, Propylenoxid oder längerkettige Oxirane verwendet. Alternativ kann auch Ethylencarbonat verwendet werden. Es kann aber auch mit einem Alkohol unter Wasserabspaltung direkt verestert werden.

Die Veresterung der phosphonigen Säure zum entsprechenden Monoester kann beispielsweise durch Umsetzung mit höhersiedenen Alkoholen unter Entfernung des gebildeten Wassers durch Azeotropdestillation erreicht werden.

Als Alkohole sind beispielsweise Butanol, Hexanol, Octanol, Ethylhexanol, Ethylenglycol, Diethylenglycol und/oder Glycerin geeignet.

Bevorzugt handelt es sich bei der Alkylphosphonigen Säure um Methanphosphonige Säure.

Die Erfindung betrifft auch die Verwendung der nach dem erfindungsgemäßen Verfahren hergestellten Phosphonigsäureester als reaktive Flammschutzmittel für Polymere.

Die Erfindung betrifft auch die Verwendung der nach dem erfindungsgemäßen Verfahren hergestellten Phosphonigsäureester als reaktive Flammschutzmittel für thermoplastische Polymere wie Polyethylenterephthalat, Polybutylenterephthalat oder Polyamid.

Die Erfindung betrifft auch die Verwendung der nach dem erfindungsgemäßen Verfahren hergestellten Phosphonigsäureester als reaktive Flammschutzmittel für duroplastische Harze wie ungesättigte Polyesterharze, Epoxidharze, Polyurethane oder Acrylate.

Die Erfindung betrifft auch die Verwendung der nach dem erfindungsgemäßen Verfahren hergestellten Phosphonigsäureester als Vorprodukt zur Synthese von phosphorhaltigen Verbindungen.

Die Erfindung wird durch die nachstehenden Beispiele erläutert:

### Beispiel 1 Umsetzung von gelbem Phosphor mit Alkylhalogenid

In einem 5 1-Edelstahl-Druckreaktor werden 2 l Toluol, in dem vorher 25 g (0,05 mol) Tributylhexadecylphosphoniumbromid gelöst worden waren, vorgelegt und auf 60 °C vorgeheizt. Es werden 62 g (2 mol) geschmolzener gelber Phosphor in den Reaktor eingetragen, unter starkem Rühren auf 0 °C abgekühlt und dann 202 g (4 mol) Methylchlorid einkondensiert. Danach werden innerhalb von 1 h 1000 g einer Lösung von 600 g KOH in 400 g Wasser eingetragen, dabei die Temperatur auf 0 °C gehalten und noch 1 h bei dieser Temperatur nachreagiert. Das Produktgemisch wird auf Raumtemperatur erwärmt, mit 400 ml Wasser verdünnt und anschließend der Reaktor über eine Verbrennung entspannt.
Man erhält zwei Phasen. Die wäßrige Phase enthält 64,2 Mol% Methanphosphonige Säure in Form ihres Kalisalzes. Nach Neutralisieren mit Salzsäure wurde die Methanphosphonige Säure im Vakuum abdestilliert.
Es wird eine gelb gefärbte Flüssigkeit erhalten. ³¹P-NMR (CHCl₃): 58 ppm

### Beispiel 2 Oxethylierung von Methanphosphonigsäure

In einem 500 ml-Fünfhalskolben mit Gaseinleitungsrohr, Thermometer, Intensivrührer und Rückflußkühler mit Gasverbrennung werden 80,3 g (1 mol) Methanphosphonige Säure vorgelegt. Bei Raumtemperatur wird Ethylenoxid eingeleitet. Unter Kühlung wird eine Reaktionstemperatur von 70 °C eingestellt. Nach beendeter Ethylenoxidaufnahme wird noch eine Stunde bei 80 °C nachreagieren lassen. Die Ethylenoxidaufnahme beträgt 65,7 g entsprechend 1,5 mol. Die Säurezahl des Produktes ist kleiner 1 mg KOH/g. Es wird ein farbloses, wasserklares Produkt erhalten. ³¹P-NMR: 38 ppm

## Patentansprüche

1. Verfahren zur Herstellung von Phosphonigsäureestern, **dadurch gekennzeichnet, daß** man
a) elementaren gelben Phosphor mit Alkylhalogeniden in Gegenwart von Alkali- und/oder Erdalkalihydroxiden zu einem Gemisch, welches als Hauptbestandteile die Alkali- und/oder Erdalkalisalze der Alkylphosphonigen, Phosphorigen und Hypophosphorigen Säure enthält, umsetzt
b) aus dem nach a) erhaltenen Gemisch die Alkylphosphonige Säure entfernt
c) die Alkylphosphonige Säure verestert.

2. Verfahren nach Anspruch 1, **dadurch gekennzeichnet, daß** als Alkylhalogenide Methylchlorid oder Methylbromid eingesetzt werden.

3. Verfahren nach Anspruch 1 oder 2, **dadurch gekennzeichnet, daß** man in einem organischem Lösungsmittel umsetzt.

4. Verfahren nach einem oder mehreren der Ansprüche 1 bis 3, **dadurch gekennzeichnet, daß** als organische Lösungsmittel geradkettige oder verzweigte Alkane, alkylsubstituierte aromatische Lösungsmittel, mit Wasser nicht oder nur teilweise mischbare Alkohole oder Ether, allein oder in Kombination miteinander, verwendet werden.

5. Verfahren nach einem oder mehreren der Ansprüche 1 bis 4, **dadurch gekennzeichnet, daß** als organisches Lösungsmittel Toluol, allein oder in Kombination mit Alkoholen, verwendet wird.

6. Verfahren nach einem oder mehreren der Ansprüche 1 bis 5, **dadurch gekennzeichnet, daß** die Reaktion in Anwesenheit eines Phasen-Transfer-Katalysators durchgeführt wird.

7. Verfahren nach Anspruch 6, **dadurch gekennzeichnet, daß** es sich bei dem Phasen-Transfer-Katalysator um Tetraalkylphosphoniumhalogenide, Triphenylalkylphosphoniumhalogenide oder Tetraorganylammoniumhalogenide handelt.

8. Verfahren nach einem oder mehreren der Ansprüche 1 bis 7, **dadurch gekennzeichnet, daß** die Temperatur bei der Reaktion -20 bis +60 °C beträgt.

9. Verfahren nach einem oder mehreren der Ansprüche 1 bis 8, **dadurch gekennzeichnet, daß** die Temperatur 0 bis 30 °C beträgt.

10. Verfahren nach einem oder mehreren der Ansprüche 1 bis 9, **dadurch gekennzeichnet, daß** die Reaktion unter einem Druck von 0 bis 10 bar durchgeführt wird.

11. Verfahren nach einem oder mehreren der Ansprüche 1 bis 10, **dadurch gekennzeichnet, daß** man den gelben Phosphor in einem Lösungsmittel oder einem Lösungsmittelgemisch suspendiert und dann mit einem Alkylhalogenid und einer Verbindung der Formel MOH oder M'(OH)₂ oder Gemischen davon, in denen M ein Alkalimetall und M' ein Erdalkalimetall bedeutet, umsetzt.

12. Verfahren nach einem oder mehreren der Ansprüche 1 bis 11, **dadurch gekennzeichnet, daß** der gelbe Phosphor und das Alkylhalogenid im molaren Verhältnis von 1:1 bis 1:3 miteinander umgesetzt werden, wobei das molare Verhältnis von gelbem Phosphor zur Verbindung der Formel MOH oder M'(OH)₂ 1:1 bis 1:5 beträgt..

13. Verfahren nach einem oder mehreren der Ansprüche 1 bis 12, **dadurch gekennzeichnet, daß** im Schritt b) die Alkylphosphonige Säure destillativ entfernt wird.

14. Verfahren nach einem oder mehreren der Ansprüche 1 bis 13, **dadurch gekennzeichnet, daß** man im Schritt c) mittels Oxethylierung verestert.

15. Verfahren nach einem oder mehreren der Ansprüche 1 bis 13, **dadurch gekennzeichnet, daß** man im Schritt c) direkt durch Umsetzung mit Alkoholen unter Wasserabspaltung verestert

16. Verfahren nach einem oder mehreren der Ansprüche 1 bis 15, **dadurch gekennzeichnet, daß** es sich bei der phosphonigen Säure um Methanphosphonige Säure handelt.

17. Verwendung der nach dem Verfahren der Ansprüche 1 bis 16 hergestellten Phosphonigsäureester als reaktive Flammschutzmittel für Polymere.

18. Verwendung der nach dem Verfahren der Ansprüche 1 bis 16 hergestellten Phosphonigsäureester als reaktive Flammschutzmittel für thermoplastische Polymere wie Polyethylenterephthalat, Polybutylenterephthalat oder Polyamid.

19. Verwendung der nach dem Verfahren der Ansprüche 1 bis 16 hergestellten Phosphonigsäureester als reaktive Flammschutzmittel für duroplastische Harze wie ungesättigte Polyesterharze, Epoxidharze, Polyurethane oder Acrylate.

## Claims

1. A process for preparing phosphonous esters which comprises
a) reacting elemental yellow phosphorus with alkyl halides in the presence of alkali metal hydroxides and/or alkaline earth metal hydroxides to form a mixture which comprises, as main components, the alkali metal salts and/or alkaline earth metal salts of the alkylphosphonous, phosphorous and hypophosphorous acids,
b) removing the alkylphosphonous acid from the mixture obtained by a)
c) esterifying the alkylphosphonous acid.

2. The process as claimed in claim 1, wherein the alkyl halides are methyl chloride or methyl bromide.

3. The process as claimed in claim 1 or 2, wherein the reaction is carried out in an organic solvent.

4. The process as claimed in one or more of claims 1 to 3, wherein, as organic solvent, use is made of unbranched or branched alkanes, alkyl-substituted aromatic solvents, water-immiscible, or only partially water-miscible, alcohols or ethers, alone or in combination with one another.

5. The process as claimed in one or more of claims 1 to 4, wherein, as organic solvent, use is made of toluene, alone or in combination with alcohols.

6. The process as claimed in one or more of claims 1 to 5, wherein the reaction is carried out in the presence of a phase-transfer catalyst.

7. The process as claimed in claim 6, wherein the phase-transfer catalyst is tetraalkylphosphonium halides, triphenylalkylphosphonium halides or tetraorganylammonium halides.

8. The process as claimed in one or more of claims 1 to 7, wherein the temperature in the reaction is -20 to +60°C.

9. The process as claimed in one or more of claims 1 to 8, wherein the temperature is 0 to 30°C.

10. The process as claimed in one or more of claims 1 to 9, wherein the reaction is carried out at a pressure of 0 to 10 bar.

11. The process as claimed in one or more of claims 1 to 10, wherein the yellow phosphorus is suspended in a solvent or in a solvent mixture and is then reacted with an alkyl halide and a compound of the formula MOH or M' (OH)₂ or mixtures thereof, where M is an alkali metal and M' is an alkaline earth metal.

12. The process as claimed in one or more of claims 1 to 11, wherein the yellow phosphorus and the alkyl halide are reacted with one another in a molar ratio of 1:1 to 1:3, the molar ratio of yellow phosphorus to the compound of the formula MOH or M'(OH)₂ being 1:1 to 1:5.

13. The process as claimed in one or more of claims 1 to 12, wherein, in step b), the alkylphosphonous acid is removed by distillation.

14. The process as claimed in one or more of claims 1 to 13, wherein, in step c), esterification is carried out by ethoxylation.

15. The process as claimed in one or more of claims 1 to 13, wherein, in step c), esterification is carried out directly by reaction with alcohols with elimination of water.

16. The process as claimed in one or more of claims 1 to 15, wherein the phosphonous acid is methanephosphonous acid.

17. The use of the phosphonous esters prepared by the process of claims 1 to 16 as reactive flame retardants for polymers.

18. The use of the phosphonous esters prepared by the process of claims 1 to 16 as reactive flame retardants for thermoplastic polymers such as polyethylene terephthalate, polybutylene terephthalate or polyamide.

19. The use of the phosphonous esters prepared by the process of claims 1 to 16 as reactive flame reatardants for thermosetting resins such as unsaturated polyester resins, epoxy resins, polyurethanes or acrylates.

## Revendications

1. Procédé de préparation d'esters d'acides phosphoneux, **caractérisé en ce que**
a) on fait réagir du phosphore jaune élémentaire avec des halogénures d'alkyle en présence d'hydroxyd es de métaux alcalins et/ou de métaux alcalino-terreux pour obtenir un mélange contenant comme constituants principaux les sels de métaux alcalins et/ou de métaux alcalino-terreux de l'acide alkylphosphoneux, phosphoreux et hypophosphoreux,
b) on sépare l'acide alkylphosphoneux du mélange obtenu dans a),
c) on estérifie l'acide alkylphosphoneux.

2. Procédé selon la revendication 1, **caractérisé en ce que** l'on utilise du chlorure de méthyle ou du bromure de méthyle comme halogénure d'alkyle.

3. Procédé selon la revendication 1 ou 2, **caractérisé en ce que** l'on effectue la réaction dans un solvant organique.

4. Procédé selon l'une ou plusieurs des revendications 1 à 3, **caractérisé en ce que** l'on utilise comme solvants organiques des alcanes linéaires ou ramifiés, des solvants aromatiques alkylés, des alcools ou des éthers non miscibles ou seulement partiellement miscibles à l'eau, seuls ou en combinaison entre eux.

5. Procédé selon l'une ou plusieurs des revendications 1 à 4, **caractérisé en ce que** l'on utilise comme solvant organique du toluène, seul ou en combinaison avec des alcools.

6. Procédé selon l'une ou plusieurs des revendications 1 à 5, **caractérisé en ce que** l'on effectue la réaction en présence d'un catalyseur de transfert de phase.

7. Procédé selon la revendication 6, **caractérisé en ce que** le catalyseur de transfert de phase est un halogénure de tétraalkylphosphonium, un halogénure de triphénylalkylphosphonium ou un halogénure de téraorganylammonium.

8. Procédé selon l'une ou plusieurs des revendications 1 à 7, **caractérisé en ce que** la température de la réaction est comprise entre -20 et +60°C.

9. Procédé selon l'une ou plusieurs des revendications 1 à 8, **caractérisé en ce que** la température est comprise entre 0 et 30°C.

10. Procédé selon l'une ou plusieurs des revendications 1 à 9, **caractérisé en ce que** la réaction s'effectue sous une pression de 0 à 10 bar.

11. Procédé selon l'une ou plusieurs des revendications 1 à 10, **caractérisé en ce que** l'on met le phosphore jaune en suspension dans un solvant ou dans un mélange de solvants, puis on le fait réagir avec un halogénure d'alkyle et un composé de formule MOH ou M'(OH)₂ ou un de leurs mélanges, où M représente un métal alcalin et M' un métal alcalino-terreux.

12. Procédé selon l'une ou plusieurs des revendications 1 à 11, **caractérisé en ce que** l'on fait réagir le phosphore jaune et l'halogénure d'alkyle dans un rapport molaire entre eux de 1:1 à 1:3, le rapport molaire du phosphore jaune au composé de formule MOH ou M'(OH)₂ étant de 1:1 à 1:5.

13. Procédé selon l'une ou plusieurs des revendications 1 à 12, **caractérisé en ce que**, dans l'étape b), on sépare l'acide alkylphosphoneux par distillation.

14. Procédé selon l'une ou plusieurs des revendications 1 à 13, **caractérisé en ce que**, dans l'étape c), on estérifie par oxyéthylation.

15. Procédé selon l'une ou plusieurs des revendications 1 à 13, **caractérisé en ce que**, dans l'étape c), on estérifie directement par réaction avec des alcools en séparant l'eau.

16. Procédé selon l'une ou plusieurs des revendications 1 à 15, **caractérisé en ce que** l'acide phosphoneux est l'acide méthanephosphoneux.

17. Utilisation des esters d'acides phosphoneux préparés selon le procédé des revendications 1 à 16 comme agents ignifuges réactifs pour des polymères.

18. Utilisation des esters d'acides phosphoneux préparés selon le procédé des revendications 1 à 16 comme agents ignifuges réactifs pour des polymères thermoplastiques comme un poly(téréphtalate d'éthylène), un poly(téréphtalate de butylène) ou un polyamide.

19. Utilisation des esters d'acides phosphoneux préparés selon le procédé des revendications 1 à 16 comme agents ignifuges réactifs pour des résines thermodurcissables comme des résines polyesters insaturés, des résines époxy, des polyuréthanes ou des acrylates.
